# EUROPÄISCHE PATENTSCHRIFT

(11) **EP 1 103 011 B1**
(45) Veröffentlichungstag und Bekanntmachung des Hinweises auf die Patenterteilung: **13.03.2002**
(21) Anmeldenummer: 99945912.6
(22) Anmeldetag: 05.07.1999
(51) Int. Cl.: G02B 6/245

(54) **VORRICHTUNG ZUM ENTFERNEN EINER SCHUTZSCHICHT EINES LICHTLEITERS**
DEVICE FOR REMOVING A PROTECTIVE LAYER OF A LIGHT DUCT
DISPOSITIF POUR ENLEVER UNE COUCHE DE PROTECTION D'UN CONDUIT DE LUMIERE

(30) Priorität: 05.08.1998 DE 29814057 U
(43) Veröffentlichungstag der Anmeldung: 30.05.2001
(73) Patentinhaber: Siemens AG, 80333 München (DE)
(72) Erfinder: KRAUSE, Dieter, D-82446 Uffing am Staffelsee (DE)
(74) Vertreter: Zedlitz, Peter, Dipl.-Inf.
(86) Internationale Anmeldenummer: DE9902073
(87) Internationale Veröffentlichungsnummer: WO0008501

(56) Entgegenhaltungen:
- EP-A- 0 154 375
- DE-A- 4 203 995
- US-A- 5 033 335
- PATENT ABSTRACTS OF JAPAN vol. 006, no. 198 (P-147), 7. Oktober 1982 (1982-10-07) & JP 57 108801 A (NIPPON TELEGR & TELEPH CORP ;OTHERS: 01), 7. Juli 1982 (1982-07-07)
- PATENT ABSTRACTS OF JAPAN vol. 009, no. 195 (P-379), 13. August 1985 (1985-08-13) & JP 60 060602 A (TOSHIBA KK), 8. April 1985 (1985-04-08)
- DETLEF SCHADE: "MIT DEM BEDARF SCHRITT HALTEN" NACHRICHTEN ELEKTRONIK UND TELEMATIK,DE,VERLAG DR. HUETHIG. HEIDELBERG, Bd. 45, Nr. 4, Seite 153-156 XP000227033 ISSN: 0177-5499

## Beschreibung

Die Erfindung bezieht sich auf eine Vorrichtung zum Entfernen einer Schutzschicht eines Lichtleiters, wobei ein Ende des Lichtleiters zwischen zwei Klemmbacken einer Abziehvorrichtung einlegbar ist, von denen zumindest einer einen Heizbakken aufweist.

Die DE 42 03 995 A1 beschreibt eine Vorrichtung zum gleichzeitigen Ablösen einer Beschichtung eines Lichtwellenleiter-Flachbandkabels. Diese Vorrichtung besitzt zwei Klemmbacken, von denen einer einen Heizbacken aufweist, und zwei Abziehschneiden die an den Klemmbacken befestigt sind.

Durch die US 5 033 335 ist es bekannt, derartige Heizbacken mit einer flachen Oberfläche zu versehen, die sich tangential an den Lichtleiter anlegt. Bei normal-dicken Lichtleitern reicht dieser Linienkontakt aus, um die Schutzschicht zu erwärmen und zu erweichen. Danach kann das Lichtleiterende aus der Vorrichtung herausgezogen werden, wobei die Abziehschneiden die erweichte Schutzschicht zurückhalten. Nach Spalte 6, Zeile 66 und 67 soll die Heizplatte auch mit Nuten für die Aufnahme der optischen Fasern versehen werden können. Eine solche Vorrichtung eignet sich jedoch nicht für Bändchenkabel mit unterschiedlichen Abständen zwischen den einzelnen Fasern.

Beim Einsatz derartiger Vorrichtungen kann es vorkommen, daß Lichtleiter unterschiedlicher Durchmesser bearbeitet werden sollen. Bei gleichen Bedingungen erfordern dickere Lichtleiter eine erheblich länger Heizdauer als dünnere, was durch unterschiedliche Vorrichtungen oder durch eine einstellbare Heizdauer erreicht werden kann.

Der Erfindung liegt die Aufgabe zugrunde, eine Vorrichtung zu schaffen, die sich für Lichtleiter unterschiedlichen Durchmessers eignet.

Diese Aufgabe wird durch die Erfindung gemäß Anspruch 1 gelöst.

Durch die Erfindung ist es möglich, Lichtleiter von großem Querschnitt und von normalem Querschnitt gleichzeitig in die Klemmvorrichtung in einer Ebene einzulegen und herauszuziehen. Durch die Anordnung des flachen Abschnitts neben der Längsnut werden in einer Vorrichtung unterschiedliche Heizbedingungen geschaffen die für die unterschiedlichen Durchmesser gleich Heizdauer ermöglichen. In der Längsnut wird die Kontaktfläche zwischen den Heizbacken und dem Lichtleiter erheblich vergrößert und z.B. bei im Querschnitt V-förmigen Längsnuten auf mehrere Stellen des Umfangs verteilt, so daß die Schutzschicht schneller durchwärmt und erweicht wird als zwichen flachen Backen.

Die dünneren Lichtleiter werden in den flachen Abschnitt eigelegt und mit kleinerer Kontaktfläche beheizt und erwärmen sich annähernd gleich schnell wie der dickere Lichtleiter. Dadurch können die unterschiedlichen Lichtleiter gleichzeitig eingelegt und abgemantelt werden. Selbst bei getrennte Bearbeitung ergibt sich der Vorteil, daß auf eine Verstellfunktion der Heizdauer verzichtet werden kann. In den flachen abschnitt können mehrere Fasern mit unterschiedlichen Abständen voneinander gleichzeitig eingelegt werden.

Durch den teilkreisförmigen Querschnitt nach Anspruch 2 ergibt sich ein großflächiger Kontakt zwischen dem Lichtleiter und dem Heizbacken.

Im folgenden wird die Erfindung anhand eines in der Zeichnung dargestellten Ausführungsbeispiels näher erläutert.
- Figur 1: zeigt einen Längschnitt durch eine Abziehvorrichtung mit einem eingelegten Lichtleiter,
- Figur 2: einen Querschnitt durch die Abziehvorrichtung entlang der Linie II-II in Figur 1.

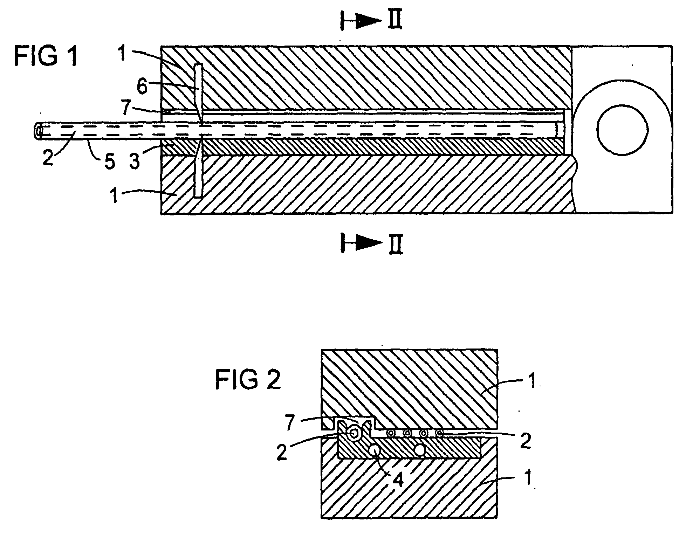

Nach den Figuren 1 und 2 ist eine scherenartig ausgebildete Abziehvorrichtung zum Entfernen einer Kunststoffschutzschicht eines Lichtleiters mit zwei gegeneinander schwenkbaren Klemmbacken 1 versehen, zwischen die unterschiedlich starke Lichtleiter 2 einlegbar sind. Einer der beiden Klemmbacken 1 weist einen Heizbacken 3 auf, der in den Klemmbacken 1 eingelassen ist und mit dessen Oberfläche im wesentlichen fluchtet. Der metallische Heizbacken 3 ist mit einem elektrischen Heizelement 4 versehen, durch die der Heizbacken 3 auf eine Temperatur erwärmbar ist, die über der Erweichungstemperatur einer Schutzschicht 5 des Lichtleiters 2 liegt.

Die dünneren der Lichtleiter 2 sind zwischen flachen Abschnitten des Heizbackens 2 und des Klemmbackens 1 eingeklemmt. Ein erheblich dickerer Lichtleiter 2 ist in eine Längsnut 6 des Heizbackens 3 eingelegt und wird von dieser weitgehend umschlossen. Dies ergibt einen so guten Wärmekontakt, daß die Schutzschicht 5 des dickeren Lichtleiters 2 im gleichen Zeitraum erweicht wird, wie bei den dünneren Lichtleitern 2. Die Klemmbacken 1 sind mit Abziehschneiden 7 versehen, die beim Zusammendrücken der Klemmbacken 1 in die Schutzschicht 5 einschneiden. Nach dem Erweichen der Schutzschicht 5 kann der Lichtleiter 2 aus der Vorrichtung herausgezogen werden, wobei die Schutzschicht 5 durch die Abziehschneiden 7 zurückgehalten wird und vom Lichtleiterkern abgezogen wird.

## Patentansprüche

1. Vorrichtung zum Entfernen einer Schutzschicht (5) zumindest eines Lichtleiters (2),
wobei die Vorrichtung eine Abziehvorrichtung mit zwei Klemmbacken (1) aufweist, zwischen denen ein Ende des Lichtleiters (2) einlegbar ist.
wobei zumindest einer der Klemmbacken (1) einen Heizbacken (3) aufweist, an den der eingelegte Lichtleiter (2) anlegbar ist,
wobei an zumindest einem der Klemmbacken (2) Abziehschneiden (7) befestigt sind, die beim Zusammendrücken der Klemmbacken (1) in die Schutzschicht (5) einschneiden und
wobei in den Heizbacken (3) zumindest eine Längsnut (6) eingelassen ist, in die der Lichtleiter (2) einlegbar ist,
**dadurch gekennzeichnet**
**daß** der Heizbacken (3) zwei unterschiedlich gestaltete Bereiche aufweist, wobei
einer der Bereiche durch zwei erhabene Rippen und die dazwischen ausgeformte Längsnut (6) zur Aufnahme eines dickeren Lichtwellenleiters gebildet ist, und
der gegenüberliegende Klemmbacken (1) eine entsprechende Ausnehmung für die Rippen aufweist, und wobei
der andere Bereich durch einen Abschnitt gebildet ist, in dem der Klemmbacken (1) und der Heizbacken (3) flach ausgebildet sind, so daß dünnere Lichtleiter zwischen diesen flachen Abschnitten in die Vorrichtung einlegbar sind.

2. Vorrichtung nach Anspruch 1,
**dadurch gekennzeichnet**
**daß** die Längsnut (6) einen teilkreisförmigen Querschnitt aufweist.

## Claims

1. Apparatus for removing a protective layer (5) from at least one optical fibre (2),
where the apparatus has a stripping apparatus having two clamping jaws (1) between which one end of the optical fibre (2) can be inserted,
where at least one of the clamping jaws (1) has a heating jaw (3) against which the inserted optical fibre (2) can be placed,
where at least one of the clamping jaws (2) has stripping edges (7) mounted on it which cut into the protective layer (5) when the clamping jaws (1) are pressed together, and
where the heating jaw (3) contains at least one longitudinal groove (6) into which the optical fibre (2) can be inserted,
**characterized**
**in that** the heating jaw (3) has two areas of different design, where
one of the areas is formed by two raised ribs and the longitudinal groove (6) formed between them for holding a relatively thick optical fibre, and
the opposite clamping jaw (1) has a corresponding recess for the ribs, and where
the other area is formed by a portion in which the clamping jaw (1) and the heating jaw (3) are of flat design, so that relatively thin optical fibres can be inserted into the apparatus between these flat portions.

2. Apparatus according to Claim 1,
**characterized**
**in that** the longitudinal groove (6) has a partial-circle-shaped cross-section.

## Revendications

1. Dispositif pour enlever une couche de protection (5) d'au moins un guide de lumière (2),
ledit dispositif comprenant un dispositif d'enlèvement muni de deux mâchoires de serrage (1) entre lesquelles peut s'insérer une extrémité du guide de lumière (2),
au moins une des mâchoires de serrage (1) comprenant une mâchoire chauffante (3) contre laquelle peut se placer le guide de lumière (2) inséré,
sur au moins une des mâchoires de serrage (1) étant fixées des lames d'enlèvement (7) qui entaillent la couche de protection (5) au moment où les mâchoires de serrage (1) se resserrent, et
dans la mâchoire chauffante (3) étant ménagée au moins une rainure longitudinale (6) dans laquelle peut s'insérer le guide de lumière (2),
**caractérisé en ce que** la mâchoire chauffante (3) comprend deux zones de configuration différente,
l'une des zones étant formée par deux nervures en relief et la rainure longitudinale (6) ménagée entre elles et destinée à recevoir un guide de lumière plus gros, et la mâchoire de serrage (1) placée en regard comprenant un creux adéquat pour lesdites nervures, et
l'autre zone étant formée par une portion dans laquelle la mâchoire de serrage (1) et la mâchoire chauffante (3) sont peu profondes de manière à pouvoir insérer dans le dispositif, entre ces portions peu profondes, des guides de lumière plus minces.

2. Dispositif selon la revendication 1, **caractérisé en ce que** la rainure longitudinale (6) présente une section partiellement circulaire.
